# FASCICULE DE BREVET EUROPEEN

(11) **EP 4 659 082 B1**
(45) Date de publication et mention de la délivrance du brevet: **18.11.2026**
(21) Numéro de dépôt: 23841613.5
(22) Date de dépôt: 22.12.2023
(51) Int. Cl.: G05D 1/00, B60W 30/14, B60W 30/16

(54) **PROCÉDÉ ET DISPOSITIF DE CONTRÔLE D'UN VÉHICULE EN FONCTION DE SON ENVIRONNEMENT**
VERFAHREN UND VORRICHTUNG ZUR UMFELDABHÄNGIGEN STEUERUNG EINES FAHRZEUGS
METHOD AND DEVICE FOR CONTROLLING A VEHICLE ACCORDING TO ITS SURROUNDINGS

(30) Priorité: 01.02.2023 FR 2300924
(43) Date de publication de la demande: 10.12.2025
(73) Titulaire: Stellantis Auto SAS, 78300 Poissy (FR)
(72) Inventeur: AIOUN, Francois, 91320 WISSOUS (FR); MOREAU, Julien, 33500 LIBOURNE (FR); JELJELI, Emine, 93200 ST DENIS (FR)
(74) Mandataire: ESIP
(86) Numéro de dépôt international: PCT/FR2023/052117
(87) Numéro de publication internationale: WO 2024/161072

(56) Documents cités:
- EP-A1- 3 480 074
- US-A1- 2020 391 747
- NEUMEIER STEFAN ET AL: "Towards a Driver Support System for Teleoperated Driving", 2019 IEEE INTELLIGENT TRANSPORTATION SYSTEMS CONFERENCE (ITSC), IEEE, 27 October 2019 (2019-10-27), pages 4190 - 4196, XP033668572, DOI: 10.1109/ITSC.2019.8917244

## Description

### Domaine technique

La présente invention concerne les procédés et dispositifs de contrôle d'un véhicule, et notamment mais pas exclusivement d'un véhicule autonome. L'invention vise en particulier le contrôle de la vitesse de véhicules en fonction de leur environnement extérieur. L'invention concerne également le contrôle à distance de véhicules autonome.

### Arrière-plan technologique

La sécurité routière fait partie des enjeux importants de nos sociétés. Avec l'augmentation du nombre d'usagers, que ce soient les véhicules, les piétons ou encore les cyclistes, sur les réseaux routiers du monde entier, les risques d'accidents et d'incidents provoqués par ces mêmes usagers n'ont jamais été aussi importants. Dans ce contexte, on connait par exemple du document EP3480074 un procédé d'aide à la conduite, destiné à favoriser une conduite en sécurité dans des virages, le procédé comprenant une estimation d'un coefficient de frottement entre la route et les roues.

Les enjeux de sécurité sont particulièrement critiques en ce qui concerne les véhicules autonomes pour le transport de passagers et/ou de marchandises. Par nature, de tels véhicules sont capables de circuler sans l'intervention d'un conducteur. Toutefois, il est nécessaire de pouvoir superviser des véhicules autonomes à distance à partir d'un centre de contrôle. Ainsi, si un véhicule autonome rencontre une défaillance de son système de conduite autonome (par exemple une panne du système ou une situation de conduite non gérée), un opérateur distant peut reprendre la main et conduire manuellement le véhicule, par exemple vers un centre de réparation ou de façon à gérer la situation de conduite afin de remettre le véhicule dans une mode nominal (situation de conduite normale).

Le contrôle à distance, dit aussi télé-pilotage, d'un véhicule nécessite l'échange de données entre le véhicule télépiloté et un centre de contrôle. Or, il a été constaté que la conduite manuelle à distance d'un véhicule n'est pas toujours aisée et peut poser des problèmes, notamment en raison des retards de communication susceptibles de gêner les communications entre le centre de contrôle et le véhicule. La communication en 4G peut ainsi conduire à des retards de communication engendrant des difficultés importantes lors du télé-pilotage d'un véhicule, ce qui peut se traduire notamment par des oscillations du véhicule autour de sa trajectoire de référence (centre de voie) au-delà d'un seuil de vitesse (par exemple au-delà de 20 km/h) qui est fonction des retards de communication subis.

Ces retards de communication peuvent être sources de dangers pour le véhicule télépiloté et les personnes environnantes. En particulier, lorsque le véhicule télépiloté se déplace parmi d'autres véhicules, par exemple en milieu urbain ou dans un trafic routier dense, de tels retards de communication peuvent conduire à des collisions ou décélérations brusques, ce qui peut être inconfortable voire dangereux pour les passagers.

De façon similaire, le contrôle manuel classique par un conducteur dans son véhicule (non-autonome ou semi-autonome) peut conduire à des risques de collisions ou décélérations brusques en raison du temps de réaction du conducteur, notamment en situation d'urgence ou lorsqu'une réaction rapide est requise. Ce temps de réaction, inhérent à la physiologie humaine et qui peut varier d'un individu à un autre et selon le niveau d'attention, peut également être source de dangers ou d'inconforts.

### Résumé de la présente invention

L'un des objets de la présente invention est de résoudre au moins l'un des problèmes ou déficiences de l'arrière-plan technologique décrit précédemment.

Un autre objet de la présente invention est de réaliser un contrôle à distanceprécis et fiable d'un véhicule, notamment pour garantir la sécurité du véhicule et des personnes et permettre une expérience utilisateur de qualité.

Un autre objet de la présente invention est de permettre un contrôle à distance performant d'un véhicule, par exemple un véhicule autonome ou semi-autonome.

Selon un premier aspect, la présente invention concerne un procédé de contrôle d'un véhicule circulant à une vitesse V sur une voie de circulation en direction d'une courbure de voie, ledit procédé comprenant :
- détermination d'une vitesse limite maximale admissible Vlim du véhicule se rapprochant à une distance d de la courbure de voie (ou à une distance d d'un début de la courbure de voie), Vlim étant un minimum entre d'une part une première valeur limite VL1 fonction d'un rayon de courbure R de la courbure de voie et d'une accélération latérale maximale admissible a1 et d'autre part une limitation routière VL2 applicable à une portion de la voie de circulation dans laquelle est positionné le véhicule ;
- détermination d'une distance de décélération Ddec, nécessaire pour adapter la vitesse V du véhicule à la vitesse limite maximale admissible Vlim, en fonction de la vitesse limite maximale admissible Vlim, de la vitesse V du véhicule et d'une accélération longitudinale minimale admissible a2 ; et
- si d ≤ Ddec, contrôle du véhicule à partir d'au moins une commande de conduite en limitant la vitesse du véhicule à la vitesse maximum admissible Vlim, le procédé comprenant en outre :
- détermination d'une distance minimale dr entre le véhicule et au moins un obstacle sur la voie de circulation, dans lequel : $d {r}_{i} = {d}_{i} - V ∗ {r}_{t} - {d}_{sec}$
   où i = 1,...,n et n est un nombre d'obstacles tel que n ≥ 1,
   où dᵢ est une distance minimale entre respectivement le véhicule et ledit au moins un obstacle, et
   où rt est un retard de transmission selon lequel est transmise ladite au moins une commande de conduite au véhicule ;
   le procédé comprenant en outre, pour chaque obstacle :
      - détermination d'une distance de décélération Ddecᵢ nécessaire pour adapter la vitesse V du véhicule à la vitesse Vᵢ dudit obstacle selon un direction de déplacement dudit véhicule ; et
      - si drᵢ ≤ Ddecᵢ, le véhicule est contrôlé pour que sa vitesse V soit limitée à un minimum entre la vitesse limite maximale admissible Vlim et la valeur Vᵢ, où Vᵢ est une vitesse dudit obstacle selon ladite direction de déplacement..

En limitant ainsi la vitesse V du véhicule, en fonction de la distance d le séparant d'une courbure de voie, on peut avantageusement garantir la stabilité (et donc la sécurité) du véhicule ainsi que le confort de ses passagers malgré des retards de communication, et ce quel que soit l'environnement dans lequel évolue le véhicule (y compris dans des sections courbes d'une voie de circulation). La stabilité et le confort peuvent par exemple être assurés alors que le véhicule est contrôlé à distance par le dispositif de contrôle, par exemple par un opérateur dans un centre de contrôle distant. Un tel contrôle à distance peut par exemple être réalisé si le véhicule subit une défaillance de son système de conduite autonome ou si le véhicule rencontre une situation de conduite anormale (non gérée). Un opérateur pourra alors à distance contrôler le véhicule pour résoudre le problème, par exemple en dirigeant le véhicule vers un centre de réparation ou à l'abris de sorte à le remettre dans une situation de conduite normale.

Le procédé selon l'invention peut comporter d'autres caractéristiques qui peuvent être prises séparément ou en combinaison, notamment parmi les modes de réalisation qui suivent.

Selon un mode de réalisation particulier, le contrôle du véhicule, réalisé à distance par le dispositif de contrôle, comprend :
- génération de ladite au moins une commande de conduite requérant au véhicule de circuler selon une vitesse qui est adaptée pour être inférieure ou égale à Vlim si d ≤ Ddec ; et
- envoi de ladite au moins une commande de conduite au véhicule pour contrôler la vitesse dudit véhicule.

Selon un mode de réalisation particulier, le dispositif de contrôle est embarqué dans le véhicule, le contrôle du véhicule comprenant :
- réception de ladite au moins une commande de conduite depuis au moins un moyen de commande embarqué du véhicule ; et
- adaptation d'une vitesse requise par ladite au moins une commande de conduite de sorte à être inférieure ou égale à Vlim si d ≤ Ddec.

Selon un mode de réalisation particulier, le procédé comprend une détermination de la limitation routière VL2 applicable à la portion de la voie de circulation à partir d'au moins l'un parmi :
- des données vidéo, représentatives d'une signalisation routière, générées par au moins une caméra embarquée dans le véhicule ; et
- des données cartographiques de la voie de circulation.

Selon un mode de réalisation particulier, la vitesse limite maximale admissible Vlim est calculée telle que : ${V}_{lim} = min \left(\sqrt{R ∗ a 1},VL2\right)$ où $VL 1 = \sqrt{R ∗ a 1}$.

Selon un mode de réalisation particulier, la distance de décélération Ddec est calculée telle que : $Ddec = \frac{Vli {m}^{2} - {V}^{2}}{2 ∗ a 2}$

Selon un deuxième aspect, la présente invention concerne un dispositif de contrôle d'un véhicule, le dispositif comprenant une mémoire associée à un processeur configuré pour la mise en œuvre des étapes du procédé de contrôle selon le premier aspect de la présente invention.

A noter que les différents modes de réalisation mentionnés ci-avant en relation avec le procédé de contrôle selon le premier aspect de l'invention ainsi que les avantages associés s'appliquent de façon analogue au dispositif de contrôle selon le deuxième aspect de l'invention.

Selon un troisième aspect, la présente invention concerne un véhicule, par exemple de type automobile ou de type véhicule à moteur terrestre, comprenant un dispositif de contrôle selon le deuxième aspect de la présente invention. Ce véhicule peut par exemple être un véhicule autonome ou semi-autonome.

Selon un quatrième aspect, la présente invention concerne un programme d'ordinateur qui comporte des instructions adaptées pour l'exécution des étapes du procédé de contrôle selon le premier aspect de la présente invention, ceci notamment lorsque le programme d'ordinateur est exécuté par au moins un processeur. Autrement dit, les différentes étapes du procédé de contrôle sont déterminées par des instructions de programmes d'ordinateurs. Ce programme d'ordinateur est configuré pour être mis en oeuvre dans un dispositif de contrôle du deuxième aspect de l'invention, ou plus généralement dans un ordinateur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement (ou support d'informations), lisible par le dispositif de contrôle selon le deuxième aspect ou plus généralement par un ordinateur (ou un processeur), sur lequel est enregistré un programme d'ordinateur comprenant des instructions pour l'exécution des étapes du procédé de contrôle selon le premier aspect de la présente invention.

D'une part, le support d'enregistrement peut être n'importe quelle entité ou n'importe quel dispositif capable de stocker le programme. Par exemple, le support peut comporter des moyens de stockage, tels qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 5 annexées, sur lesquelles :
[Fig. 1] illustre schématiquement un environnement comprenant un véhicule contrôlé à distance par un dispositif de contrôle, selon au moins un exemple de réalisation particulier et non limitatif de la présente invention ;
[Fig. 2] illustre schématiquement le véhicule et le dispositif de contrôle de la figure 1, selon au moins un exemple de réalisation particulier et non limitatif de la présente invention ;
[Fig. 3] illustre schématiquement un environnement comprenant un véhicule contrôlé à distance par un dispositif de contrôle, selon au moins un exemple de réalisation particulier et non limitatif de la présente invention ;
[Fig. 4] illustre schématiquement le dispositif de contrôle tel que représenté en figures 1-3, selon au moins un exemple de réalisation particulier et non limitatif de la présente invention ; et
[Fig. 5] illustre un diagramme de différentes étapes d'un procédé de contrôle d'un véhicule comme représenté en figures 1-4, selon au moins un exemple de réalisation particulier et non limitatif de la présente invention.

### Description des exemples de réalisation

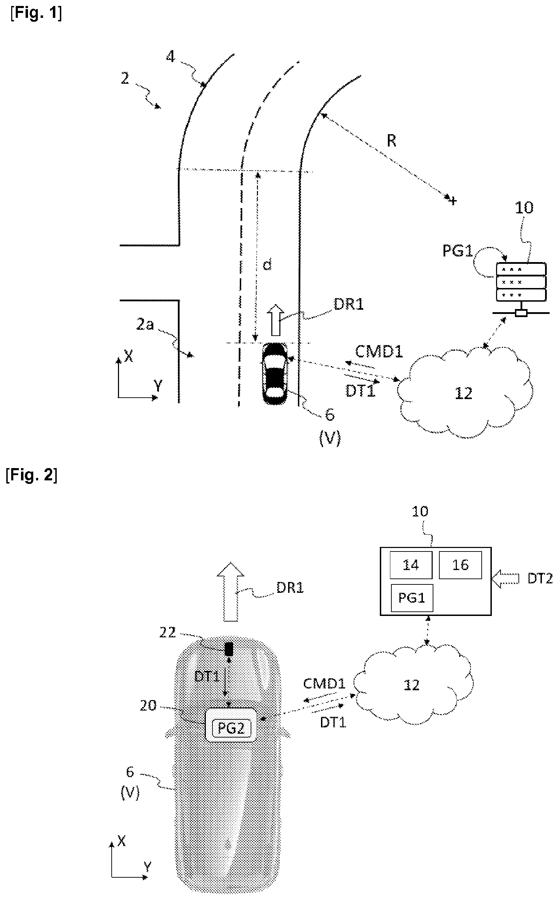

Un procédé et un dispositif de contrôle d'un véhicule vont maintenant être décrits dans ce qui va suivre en référence conjointement aux figures 1-5. Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Les termes « premier(s) » (ou première(s)), « deuxième(s) », etc.) sont utilisés dans ce document par convention arbitraire pour permettre d'identifier et de distinguer différents éléments (tels que des opérations, des véhicules, etc.) mis en œuvre dans les modes de réalisation décrits ci-après.

Comme précédemment indiqué, l'invention vise notamment un procédé de contrôle d'un véhicule, tel qu'un véhicule de type automobile ou autre, ou plus généralement un véhicule de type véhicule terrestre motorisé. L'invention vise notamment, mais pas exclusivement, le contrôle à distance d'un véhicule autonome ou semi-autonome. L'invention s'applique également au contrôle local (par un conducteur) d'un véhicule semi-autonome ou non-autonome.

Le procédé de l'invention vise en particulier à contrôler un véhicule circulant à une vitesse V donnée sur une voie de circulation en direction d'une courbure de voie. Comme décrit ci-après, une courbure de voie peut correspondre à une quelconque section courbe d'une voie de circulation (tel qu'un virage par exemple).

Selon un exemple particulier et non limitatif de réalisation de la présente invention, ce procédé comprend :
- détermination d'une vitesse limite maximale admissible Vlim du véhicule se rapprochant à une distance d de la courbure de voie, Vlim étant un minimum entre d'une part une première valeur limite VL1 fonction d'un rayon de courbure R de la courbure de voie et d'une accélération latérale maximale admissible a1 et d'autre part une limitation routière VL2 applicable à une portion de la voie de circulation dans laquelle est positionné le véhicule ;
- détermination d'une distance de décélération Ddec, nécessaire pour adapter la vitesse V du véhicule à la vitesse limite maximale admissible Vlim, en fonction de la vitesse limite maximale admissible Vlim, de la vitesse V du véhicule et d'une accélération longitudinale minimale admissible a2 ; et
- si d ≤ Ddec, contrôle du véhicule à partir d'au moins une commande de conduite en limitant la vitesse du véhicule à la vitesse maximum admissible Vlim.

Le procédé permet un contrôle performant du véhicule malgré des retards de communication affectant la transmission de commandes de conduite au véhicule considéré. Comme décrit ci-après, ces retards de communication peuvent résulter de latences de communication entre un centre de contrôle et le véhicule ou encore d'un temps de réaction entre un conducteur et le véhicule.

D'autres aspects et avantages de la présente invention ressortiront des exemples de réalisation décrits ci-dessous en référence aux dessins mentionnés ci-avant.

La figure 1 illustre schématiquement une voie de circulation 2 sur laquelle circule un véhicule 6 à une vitesse notée V en direction d'une courbure de voie 4, c'est-à-dire selon une direction de déplacement longitudinale notée DR1.

L'environnement 2 dans lequel évolue le véhicule 6 peut varier selon le cas. On suppose par exemple dans ce qui suit que le véhicule 6 se trouve à un instant courant dans une portion 2a de la voie de circulation 2. La configuration de cette portion de voie de circulation (notamment en termes de forme, nombre de voie, règles de circulation en vigueur, etc.) peut varier selon le cas. Dans cet exemple, les véhicules circulent à droite, comme en France. L'invention ne se limite cependant pas à un tel exemple et s'étend à toutes les configurations de route, incluant celles où les véhicules circulent à gauche.

La courbure de voie 4 peut être une quelconque section courbe (un virage par exemple) de la voie de circulation 2 sur laquelle se déplace le véhicule 6. On suppose à titre d'exemple que la courbure de voie 4 vers laquelle se dirige le véhicule 6 présente un rayon de courbure R.

Le type et les caractéristiques du véhicule 6 peuvent être adaptés selon le cas. Le véhicule 6 est par exemple de type automobile ou équivalent. En variante, le véhicule 6 peut être un car, un bus, un camion, un véhicule utilitaire ou une motocyclette, ou plus généralement un véhicule de type véhicule terrestre motorisé.

Selon un exemple particulier, le véhicule 6 circule sous la supervision totale d'un conducteur.

Selon un exemple particulier, le véhicule 6 circule dans un mode autonome ou semi-autonome. Autrement dit, le véhicule 6 peut être un véhicule autonome ou semi-autonome.

Plus particulièrement, le véhicule 6 peut circuler selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5. Le niveau 0 correspond à un véhicule n'ayant aucune autonomie, dont la conduite est sous la supervision totale du conducteur ; le niveau 1 correspondant à un véhicule avec un niveau d'autonomie minimal, dont la conduite est sous la supervision du conducteur avec une assistance minimale d'un système ADAS (de l'anglais « Advanced Driver-Assistance System » ou en français « Système avancé d'aide à la conduite ») ; et le niveau 5 correspondant à un véhicule complètement autonome.

Les 5 niveaux d'autonomie de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

Le véhicule 6 peut être configuré selon l'un quelconque des niveaux d'autonomie mentionnés ci-dessus. Selon un exemple particulier de réalisation, le véhicule 6 est configurée selon un mode autonome, c'est-à-dire avec un niveau d'autonomie de 5 selon la classification ci-dessus. Selon un exemple particulier de réalisation, le véhicule 6 est configurée selon un niveau d'autonomie compris entre 3 et 5. Selon un exemple particulier de réalisation, le véhicule 6 est configurée selon un niveau d'autonomie compris entre 0 et 2.

Comme illustré en figure 1 selon un exemple particulier, un dispositif de contrôle 10 (dit aussi dispositif) peut être configuré pour contrôler à distance le véhicule 6. Pour ce faire, le dispositif de contrôle 10 peut communiquer à distance avec le véhicule 6 via un quelconque réseau de communication 12, par exemple un réseau de communication sans fil, par exemple de type 4G, 5G ou autre. Comme décrit par la suite, des données peuvent ainsi être échangées entre le véhicule 6 et le dispositif de contrôle 10 pour permettre un contrôle à distance du véhicule 6. Le véhicule DT1 peut par exemple envoyer des données de capteur DT1 qui sont traitées par le dispositif de contrôle 10. En réponse aux données de capteur DT1, le dispositif de contrôle 10 peut alors transmettre des commandes de conduite au véhicule pour contrôler ce dernier. De telles commandes de conduite peuvent comprendre notamment des instructions pour décélérer ou accélérer.

Comme déjà indiqué, des retards de communication (ou latences) peuvent gêner les échanges de données entre le véhicule 6 et le dispositif de contrôle 10, ces retards étant fonction notamment du type de réseau de communication 12 utilisé et de sa capacité de transmission (par exemple sa bande passante en communication montante et/ou descendante) à un instant donné. Ces retards de communication sont susceptibles de gêner le contrôle à distance du véhicule 6 par le dispositif de contrôle 10.

Comme illustré en figure 2, le dispositif de contrôle 10 peut comprendre au moins un processeur 14 et une mémoire non volatile 16. Selon un exemple particulier, le dispositif 10 est configuré pour mettre en œuvre un procédé (ou processus) de contrôle comme décrit ci-après. A cet effet, le dispositif 10 peut comprendre un programme d'ordinateur PG1, stocké par exemple dans la mémoire non volatile 16 (mémoire de type Flash ou ROM par exemple), ce programme d'ordinateur PG1 comprenant des instructions pour la mise en œuvre du procédé (ou processus) de contrôle comme décrit ci-après. Le processeur 14 est ainsi configuré pour exécuter notamment les instructions définies par le programme d'ordinateur PG1.

Selon un exemple particulier, le dispositif de contrôle 10 est configuré pour récupérer des données cartographiques DT2 de la voie de circulation 2.

Le dispositif de contrôle 10 peut par exemple prendre la forme d'un (ou comprendre un) serveur ou d'un calculateur, ou d'une combinaison de serveurs ou calculateurs. Le dispositif 10 peut par exemple être (ou faire partie) d'un centre de contrôle configuré pour superviser à distance le véhicule 6. Un exemple de mise en œuvre du dispositif de contrôle 10 est décrit ultérieurement.

Comme illustré en figure 2, le véhicule 6 peut comprendre un ou des capteurs 22 permettant de collecter des informations sur l'environnement du véhicule 6. Selon un exemple particulier, le véhicule 6 comprend une ou des caméras 22 configurées pour visualiser l'environnement du véhicule 6 (en particulier la voie de circulation 2). On suppose par la suite que le véhicule 6 embarque une caméra 22 configurée pour générer des données vidéo (ou données d'image) DT2 représentatives de l'environnement extérieur du véhicule 6.

Toujours en référence à la figure 2, le véhicule 6 peut comprendre un dispositif embarqué 20 configuré pour coopérer avec le dispositif distant 10 pour permettre un contrôle à distance du véhicule 6. En particulier, le dispositif embarqué 20 peut être configuré pour transmettre des données de capteur DT1 au dispositif de contrôle 10 et pour contrôler le véhicule 6 en réponse à des commandes de conduite reçues depuis le dispositif 10 au travers du réseau de communication 12. Pour ce faire, le dispositif embarqué 20 peut par exemple exécuter un programme d'ordinateur noté PG2.

A noter toutefois que des modes de réalisation sont possibles sans que le véhicule 6 soit contrôlé à distance (télépiloté), c'est-à-dire sans que le dispositif 10 soit disposé à distance du véhicule 6. En variante, le dispositif de contrôle 10 peut être embarqué dans le véhicule 6. Dans ce cas, le dispositif 10 peut être configuré pour opérer un contrôle sur le véhicule 6, par exemple pour contrôler la vitesse du véhicule 6 comme décrit ultérieurement. Le dispositif 10 et le dispositif embarqué 20 peuvent alors former un seul et même dispositif. Un tel contrôle local du véhicule 6 est par exemple possible alors que le véhicule 6 est configuré pour circuler sous la supervision totale d'un conducteur (niveau d'autonomie 0) ou éventuellement en mode semi-autonome (niveau d'autonomie égal à 1 ou 2 par exemple).

Comme indiqué ci-avant, le système de contrôle 10 peut être configuré pour mettre en oeuvre un processus de contrôle de l'invention. Ce processus est à présent décrit conjointement aux figures 1 et 2 selon des modes de réalisation particuliers. A noter toutefois que le processus de contrôle de l'invention peut en variante être mis en œuvre localement par le dispositif de contrôle 10 embarqué dans le véhicule 6 (assistance à la conduite pour véhicules de niveau d'automatisation inférieur ou égal au niveau 2 d'autonomie).

Comme déjà indiqué, on considère à titre d'exemple que le véhicule 6 circule à une vitesse V sur la voie de circulation 2 (plus particulièrement sur la portion 2a) en direction de la courbure de voie 4. La direction DR1 indique la direction de déplacement longitudinale du véhicule 6 le long de la voie de circulation 2.

Dans une première opération, le dispositif de contrôle 10 détermine une vitesse limite maximale admissible Vlim du véhicule 6 se rapprochant à une distance d de la courbure de voie 4 (ou plus précisément à une distance d d'un début de la courbure de voie 4). Cette vitesse limite maximale admissible Vlim est un minimum entre, d'une part, une première valeur limite VL1 fonction d'un rayon de courbure R de la courbure de voie 4 et d'une accélération latérale maximale admissible a1 et, d'autre part, une limitation routière VL2 applicable à la portion 2a de la voie de circulation 2 dans laquelle est positionné le véhicule 6.

Plus particulièrement, Vlim peut définir une vitesse limite maximale admissible pour conserver un niveau acceptable de stabilité et de confort latéral du véhicule 6, et ce quel que soit la courbure de la voie de circulation.

Selon un exemple particulier, la vitesse limite maximale admissible Vlim est calculée selon l'expression suivante :
[Math. 1] ${V}_{lim} = min \left(\sqrt{R ⋅ a 1},VL2\right)$ où $VL 1 = \sqrt{R ⋅ a 1}$*.*

L'accélération latérale maximale admissible a1 est un paramètre (ou une variable) dont la valeur peut être adaptée au cas par cas, notamment en fonction du niveau de stabilité et de confort que l'on souhaite.

Comme indiqué ci-avant, la première valeur limite VL1 dépend notamment du rayon de courbure R de la courbure de voie 4 située en amont du véhicule 6. Aussi, le dispositif 10 peut déterminer ce rayon de courbure R selon une quelconque manière appropriée. Selon un exemple particulier, le rayon de courbure R est déterminé par le dispositif 10 à partir de données vidéo DT1 générées par la caméra embarquée 22 et transmises au dispositif 10 (figures 1 - 2). Pour ce faire, la caméra 22 peut être configurée pour visualiser la courbure de voie 4 et générer des données vidéo permettant d'en déduire le rayon de courbure R.

Par ailleurs, la limitation routière VL2 applicable à la portion 2a de la voie de circulation peut être une quelconque limitation routière, telle qu'une limitation de vitesse par exemple. Cette limitation routière peut être définie conformément à un règlement de circulation en vigueur dans la portion de voie 2a. La limitation routière VL2 peut par exemple être une limitation maximale de vitesse en vigueur dans la portion de voie 2a (exemple : limitation à 80 km/h ou 110 km/h).

Le dispositif 10 peut déterminer cette limitation routière VL2 d'une quelconque manière appropriée, par exemple à partir à partir d'au moins l'un parmi :
- des données vidéo (ou données d'image) DT1, représentatives d'une signalisation routière, générées par au moins une caméra 22 embarquée dans le véhicule ; et
- des données cartographiques DT2 de la voie de circulation.

La signalisation routière précitée peut par exemple prendre la forme d'un panneau de signalisation ou une quelconque indication de signalisation routière inscrite sur un support au voisinage de (ou sur la) voie de circulation 2.

Les données cartographiques DT2 peuvent être de quelconques données définissant des caractéristiques routières de la portion de voie 2a, ces caractéristiques permettant d'en déduire la limitation routière VL2.

Selon un exemple particulier, le dispositif 10 utilise les données DT1 et DT2 pour déterminer la limitation routière VL2 en vigueur.

Selon un exemple particulier, les mêmes données vidéo DT2 sont transmises au dispositif 10 et traitées par ce dernier pour déterminer à la fois le rayon de courbure R et la limitation routière VL2 en vigueur.

Dans une deuxième opération, le dispositif de contrôle 10 détermine une distance Ddec, dite distance de décélération, à savoir une distance nécessaire pour adapter (ou limiter, ou réduire) la vitesse V du véhicule 6 à la vitesse limite maximale admissible Vlim. Cette distance de décélération Ddec est déterminée en fonction de la vitesse limite maximale admissible Vlim, de la vitesse V du véhicule à l'instant courant et d'une accélération longitudinale minimale admissible a2.

L'accélération longitudinale minimale admissible a2 définit une décélération maximale admissible pour le véhicule 6. Cette décélération maximale a2 est un paramètre (ou une variable) dont la valeur peut être adaptée au cas par cas, notamment en fonction d'une distance de sécurité que l'on souhaite maintenir.

Selon un exemple particulier, la distance de décélération Ddec est calculée selon l'expression suivante :
[Math. 2] $Ddec = \frac{Vli {m}^{2} - {V}^{2}}{2 ⋅ a 2}$

Dans une troisième opération, le dispositif de contrôle 10 réalise un contrôle du véhicule 6. Pour ce faire, il compare la distance d, qui sépare le véhicule 6 à la courbure de voie 4, avec la valeur de décélération Ddec. Si d ≤ Ddec, le dispositif 10 contrôle le véhicule 10 à partir d'au moins une commande de conduite CMD1 en limitant la vitesse V du véhicule 6 à la vitesse maximum admissible Vlim précédemment déterminée. Autrement dit, si d ≤ Ddec, alors le dispositif 10 limite la vitesse V du véhicule 6 à Vlim (vitesse V ≤ Vlim). Le dispositif 10 met ainsi en oeuvre un limitateur de vitesse pour adapter les commandes CMD1 de sorte à ce qu'elles respectent la vitesse limite Vlim.

La limitation de la vitesse V du véhicule 6, en fonction de la distance d du véhicule 6 vis-à-vis d'une courbure de voie 4 (ou vis-à-vis du début de la courbure de voie), constitue une première fonction de contrôle notée F1. Cette fonction de contrôle F1 permet de garantir la stabilité (et donc la sécurité) du véhicule 6 et le confort de ses passagers malgré des retards de communication, et ce quel que soit l'environnement dans lequel évolue le véhicule 6 (y compris dans des sections courbes d'une voie de circulation). En particulier, dans cet exemple, la stabilité et le confort sont assurés alors que le véhicule 6 est contrôlé à distance par le dispositif de contrôle 10, par exemple par un opérateur dans un centre de contrôle distant.

Dans le cas où un réseau de communication 12 de type 4G par exemple est utilisé, des retards de communication peuvent gêner les communications entre le dispositif embarqué 20 et le dispositif de contrôle 10. Le processus de contrôle 10 permet de garantir un contrôle à distance, précis et fiable, du véhicule 6, par exemple si le véhicule 6 subit une défaillance de son système de conduite autonome ou si le véhicule 6 rencontre une situation de conduite anormale (non gérée). Un opérateur pourra alors à distance contrôler le véhicule 6 pour résoudre le problème, par exemple en dirigeant le véhicule 6 vers un centre de réparation ou à l'abri de sorte à le remettre dans une situation de conduite normale.

Plus précisément, dans l'exemple considéré, le contrôle du dispositif 10 sur le véhicule 6 est opéré à distance. En l'espèce, le véhicule 10 est télépiloté par le dispositif 10 au travers du réseau de communication 12. Pour ce faire, le dispositif 10 envoie au moins une commande de conduite CMD1 au véhicule 6 (figure 1), ou plus précisément au dispositif embarqué 20 (figure 2). Chaque commande de conduite CMD1 spécifie au véhicule 6 (ou plus précisément au dispositif embarqué 20) au moins une consigne de déplacement, ou au moins un paramètre, que le véhicule 6 doit respecter pour adapter son déplacement. Une commande de conduite CMD1 peut par exemple constituer (ou comprendre) une commande d'accélération ou une commande de freinage requérant au véhicule 6 d'accélérer ou de freiner.

On considère par la suite que le dispositif 10 envoie une commande de conduite CMD1 au dispositif embarqué 20 du véhicule 6 pour adapter son déplacement, bien qu'il soit possible d'envoyer une pluralité de commandes de conduite simultanément ou au cours du temps.

Selon un exemple particulier, le dispositif 10 génère une commande de conduite CMD1 requérant au véhicule 6 de circuler selon une vitesse qui est adaptée pour être inférieure ou égale à Vlim si d ≤ Ddec. Ainsi, s'il est détecté que la condition d ≤ Ddec est remplie, le dispositif 10 peut par exemple adapter (par exemple diminuer) une vitesse de consigne de la commande de conduite CMD1 afin qu'elle soit inférieure ou égale à la distance de décélération Ddec. Le dispositif 10 envoie ensuite la commande de conduite CMD1 au véhicule 6 pour contrôler à distance la vitesse dudit véhicule 6. Il est ainsi possible de garantir la stabilité du véhicule 6 et le confort de ses passagers.

Selon un exemple particulier, au cours du contrôle de la troisième opération, s'il est détecté que d > Ddec, c'est-à-dire que d est supérieure à la distance du véhicule 6 à la partie courbe 4 de la route nécessitant de réduire la vitesse pour maintenir la stabilité du véhicule, alors le dispositif 10 contrôle le véhicule 6 à partir d'au moins une commande de conduite CMD1 pour que la vitesse du véhicule 6 ne soit pas limitée pour garantir la stabilité et que celle-ci ne soit donc pas modifiée (Vmax=V). Autrement dit, si d > Ddec, alors la vitesse V du véhicule 6 n'est pas modifiée (le mécanisme de limitation de vitesse n'est pas activé).

Comme indiqué ci-avant, le contrôle au cours de la troisième opération est fonction du résultat de la comparaison de la distance d avec la distance de décélération Ddec (fonction F1). Pour ce faire, le dispositif 10 récupère ou détermine la distance d entre le véhicule 6 et la courbure de voie 4 selon toute manière appropriée. Selon un exemple particulier, le dispositif 10 détermine la distance d séparant le véhicule 5 de la courbure de voie 4 à partir de l'expression suivante :
[Math. 3] $d = V ⋅ {r}_{t} + dsec$
où où rt est un retard de transmission (ou retard de communication) selon lequel est transmise ladite au moins une commande de conduite CMD1 au véhicule 6, et
où dsec est une incertitude maximale sur des distances, y compris la distance d.

Le retard de transmission rt est un retard de communication entre le dispositif de contrôle 10 et le véhicule 6. Dans l'exemple considéré, rt correspond plus particulièrement à un décalage temporel ou un temps de latence qui retarde (ou affecte) les échanges de données (notamment les données de capteur DT1 et les commandes de conduite CMD1) entre le dispositif 10 et le véhicule 6. Ce retard de communication peut varier au cours du temps selon divers facteurs, tels que par exemple des capacités de transmission du réseau de communication 12 (par exemple sa bande passante en communication montante et/ou descendante).

Le retard de communication rₜ peut être mesuré par le dispositif embarqué 20 selon un pas d'acquisition au cours du temps (c'est-à-dire d'un pas de temps d'acquisition à un autre) en mesurant une différence entre un premier instant t1 où le dispositif embarqué 20 envoie des données DT1 (par exemple des données vidéo) et un deuxième instant t2 où le dispositif embarqué 20 reçoit au moins une commande de conduite CMD1 associée auxdites (ou issue des) données DT1. Le dispositif embarqué 20 peut ainsi envoyer au dispositif de contrôle 10 la valeur rt déterminée à partir de la mesure précitée. Une estimation de ce retard de communication peut être réalisée, puis transmise au dispositif 10, régulièrement au cours du temps (par exemple pour chaque pas d'acquisition).

Pour permettre de déterminer si une commande de conduite CMD1 reçue à l'instant t2 est associée à des données DT1 envoyées à l'instant t1, le dispositif embarqué 20 peut par exemple envoyer au dispositif de contrôle 10 les données DT1 en association avec un identifiant (par exemple un identifiant de t1). Le dispositif de contrôle 10 peut en outre envoyer au moins une commande de conduite CMD1 en association avec ce même identifiant. A partir de cet identifiant, le dispositif embarqué 20 détecte que la ou les commandes CMD1 reçues sont issues des données DT1 précédemment envoyées à l'instant t1. De cette manière, le dispositif embarqué 20 peut mesurer le temps entre les instants t1 et t2 et en déduire le retard de communication rt.

Comme le retard de communication rt peut varier d'un pas d'acquisition à l'autre, le dispositif de contrôle 10 peut avantageusement prendre en compte une valeur de retard maximale constatée sur une période donnée.

Par ailleurs, la distance d, et plus généralement les distances susceptibles d'être mesurées dans l'environnement du véhicule 6, peut présenter un degré d'incertitude que l'on peut avantageusement prendre en compte dans l'estimation de la distance d pour augmenter sa fiabilité. Cette incertitude peut résulter de variations de vitesses (en particulier du véhicule 6) sur un pas de temps d'acquisition. La valeur dsec est une incertitude maximale sur des distances, notamment la distance d.

Dans ce qui précède, on a supposé que le dispositif de contrôle 10 est distant du véhicule 6 de sorte que le contrôle du dispositif 10 (fonction F1) sur le véhicule 6 est opéré à distance. En variante, le dispositif 10 est embarqué dans le véhicule 6 et met en œuvre le processus de contrôle de façon analogue à ce qui est décrit dans le présent document dans le cas où le dispositif 10 est distant du véhicule 6. Le dispositif 10 peut par exemple former un seul et même dispositif avec le dispositif embarqué 20. Dans ce cas, si d ≤ Ddec, le dispositif 10 contrôle le véhicule 6 à partir d'au moins une commande de conduite CMD1 en limitant la vitesse V du véhicule à la vitesse maximum admissible Vlim. Ce contrôle de la vitesse (fonction F1) peut ainsi constituer une fonction d'assistance à la conduite. Pour ce faire, le dispositif 10 peut par exemple adapter des commandes d'accélération CMD1 reçus d'un conducteur du véhicule 6 de sorte à ce que la vitesse V du véhicule 6 soit limitée à Vlim.

Selon un exemple particulier, le dispositif 10 embarqué dans le véhicule 6 reçoit au moins une commande de conduite CMD1 depuis au moins un moyen de commande embarqué dans le véhicule 6, par exemple depuis un système de commande (non représenté) de la vitesse V du véhicule 6, ce système pouvant comprendre par exemple un pédalier pour contrôler la vitesse. Le dispositif embarqué 10 adapte alors la vitesse requise (ou vitesse de consigne) par ladite au moins une commande de conduite CMD1 de sorte à cette vitesse requise soit inférieure ou égale à Vlim si ≤ Ddec.

Dans ce qui précède, la vitesse V du véhicule 6 est contrôlée en fonction de la distance d séparant le véhicule 6 d'une courbure de voie 4 (fonction F1). D'autres informations peuvent toutefois être prises en compte pour affiner le contrôle du véhicule 6 et ainsi améliorer encore la sécurité vis-à-vis de potentielles collisions avec des obstacles et le confort pour les passagers. Le dispositif 10 peut par exemple adapter le contrôle du véhicule 6 en fonction de la distance d et en fonction de la distance du véhicule 6 avec au moins un obstacle sur la voie de circulation 2. Dans ce qui suit, on suppose que l'on prend en compte des obstacles prenant la forme de véhicules autres que le véhicule 6, bien que des variantes soient possibles où les obstacles ne sont pas des véhicules. A noter que le nombre d'obstacles pris en compte peut varier selon le cas (par un exemple, prise en compte d'un obstacle ou d'une pluralité d'obstacles).

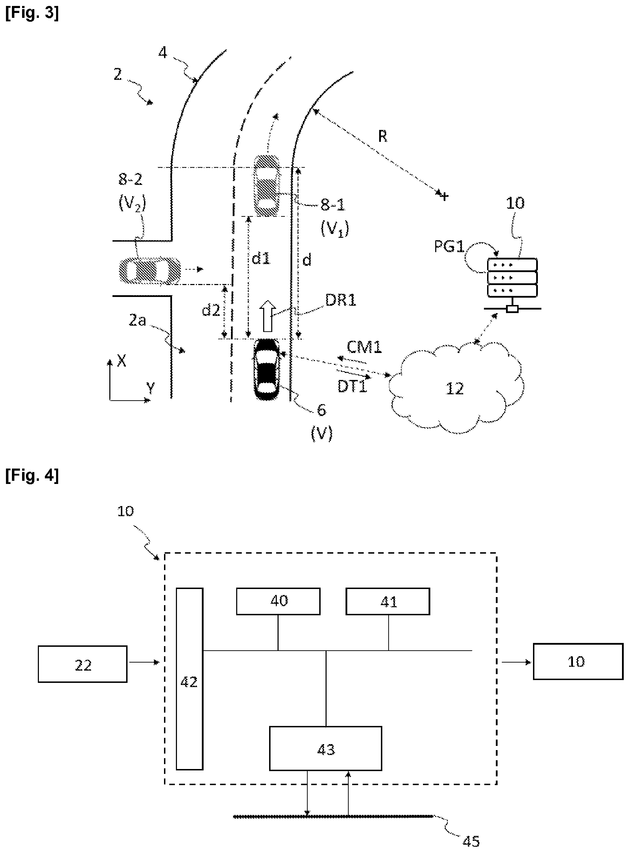

Plus précisément, selon un exemple particulier illustré en figure 3, on suppose que deux véhicules 8 (notés respectivement 8-1 et 8-2), autres que le véhicule 6, se trouvent à un instant courant dans la même portion de voie 2a que le véhicule 6. Autrement dit, deux autres véhicules 8 se trouvent dans le voisinage du véhicule 6 sur la voie de circulation 2.

Au cours du processus de contrôle, le dispositif 10 détermine une distance minimale *drᵢ* entre le véhicule 6 et au moins un obstacle 8 sur la voie de circulation 2, dans lequel :
[Math. 4] $d {r}_{i} = {d}_{i} - V ∗ {r}_{t} - {d}_{sec}$
où i = 1,...,n et n est un nombre d'obstacles 8 tel que n ≥ 1,
où dᵢ est une distance minimale entre respectivement le véhicule et ledit au moins un obstacle 8, et
où rt est un retard de transmission selon lequel est transmise ladite au moins une commande de conduite CMD1 au véhicule 6.

Comme déjà indiqué, on suppose ici que deux obstacles 8 sont pris en compte, à savoir les véhicules 8-1 et 8-2 (n = 2). Aussi, on peut calculer dr₁ et dr₂ en fonction respectivement de d1 et d2 à partir de l'expression ci-dessus.

Préalablement à la détermination des distances minimales dr₁ et dr₂, le dispositif 10 détecte par exemple les autres véhicules 8-1 et 8-2 à partir de données capteur DT1 reçues. La détection des véhicules 8 peut se faire par exemple au moyen d'un ou plusieurs quelconques capteurs embarqués dans le véhicule 6 (par exemple la caméra embarqué 22).

On suppose par exemple que chaque autre véhicule 8 circule selon une vitesse Vᵢ (i = 1 ou 2) selon la direction de déplacement DR1 (selon x, figures 1-2). Chaque obstacle 8 peut être mobile ou immobile selon la direction DR1. La vitesse V₂ du véhicule 8-2 peut par exemple être considérée comme nulle selon la direction DR1.

Toujours au cours du processus de contrôle, le dispositif 10 réalise les étapes suivantes pour chaque obstacle 8 détecté (à savoir les véhicules 8-1 et 8-2 dans l'exemple considéré) :
- détermination d'une distance de décélération Ddecᵢ nécessaire pour adapter la vitesse V du véhicule 6 à la vitesse Vᵢ dudit obstacle 8 selon la direction de déplacement DR1 du véhicule 6 ; et
- si drᵢ ≤ Ddecᵢ, le véhicule 6 est contrôlé pour que sa vitesse V soit limitée à un minimum entre la vitesse limite maximale admissible Vlim et la valeur Vᵢ, où Vᵢ est une vitesse dudit obstacle 8 selon la direction de déplacement DR1.

Le contrôle de la vitesse V du véhicule 6 en fonction de la distance dudit véhicule 6 relativement à au moins un obstacle 8 constitue une fonction de contrôle notée F2, cette fonction permettant d'améliorer la stabilité (et donc la sécurité) du véhicule 6 et le confort des passagers, en particulier lorsque le véhicule 6 est contrôlé à distance par le dispositif 10 (télé-pilotage) ou contrôlé de façon embarquée. II est en particulier possible d'éviter des collisions du véhicule 6 avec des obstacles tels que des véhicules ou autre évoluant dans l'environnement du véhicule 6.

Ainsi, le dispositif 10 peut comparer pour chaque obstacle 8 la distance minimale drᵢ et la distance de décélération Ddecᵢ.Si la distance drᵢ est inférieure ou égale à la distance de décélération Ddecᵢ, alors le dispositif 10 détermine la vitesse limite Vlim du véhicule 6 en tant que minimum entre la précédente valeur de la vitesse Vlim obtenue au cours de la troisième opération (fonction F1) et la valeur Vᵢ. Autrement dit, pour chaque obstacle i :
[Math. 5] $si {dr}_{i} \leq {Ddec}_{i} , {V}_{lim} = min \left({V}_{lim}, {V}_{i}\right)$

La valeur initiale choisie pour Vlim peut être adaptée selon le cas, et peut par exemple être la vitesse V du véhicule à un instant initial.

Comme décrit ci-avant, le contrôle de la vitesse V du véhicule 6 peut être réalisé en fonction à la fois de la distance d à une courbure de voie 4 (fonction F1) et en fonction de la distance dr aux éventuelles obstacles 8 (fonction F2). Autrement dit, les fonctions de contrôle F1 et F2 peuvent être exécutées simultanément par le dispositif 10 pour contrôler le véhicule 6 (à distance ou de façon embarquée). En variante, le contrôle du véhicule 6 peut être réalisé par le dispositif 10 en exécutant que F1 ou que F2.

La figure 4 illustre schématiquement un dispositif de contrôle 10 configuré pour contrôler un véhicule, tel que le véhicule 6 comme précédemment décrit en référence aux figures 1-3, selon un exemple de réalisation particulier et non limitatif de la présente invention. Le dispositif de contrôle 10 correspond par exemple à un dispositif distant vis-à-vis du véhicule 6, par exemple un serveur ou un calculateur.

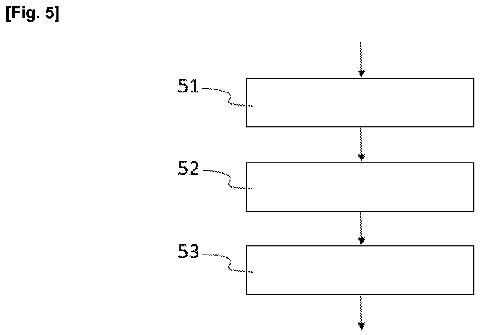

Le dispositif de contrôle 10 est par exemple configuré pour la mise en œuvre des opérations du processus de contrôle tel que précédemment décrit en regard des figures 1-3 et/ou des étapes du procédé décrit ci-après en regard de la figure 5. Des exemples d'un tel dispositif de contrôle 10 comprennent, sans y être limités, un serveur ou une pluralité de serveurs, un équipement électronique embarqué tel qu'un ordinateur de bord d'un véhicule, un calculateur électronique tel que par exemple une UCE (« Unité de Commande Electronique »), un téléphone intelligent (de l'anglais « smartphone »), une tablette, un ordinateur portable, etc. Les éléments du dispositif de contrôle 10, individuellement ou en combinaison, peuvent être intégrés dans un unique circuit intégré, dans plusieurs circuits intégrés, et/ou dans des composants discrets. Le dispositif de contrôle 10 peut être réalisé sous la forme de circuits électroniques ou de modules logiciels (ou informatiques) ou encore d'une combinaison de circuits électroniques et de modules logiciels.

Le dispositif de contrôle 10 comprend un (ou plusieurs) processeur(s) 40 (par exemple le processeur 14 illustré en figure 2) configurés pour exécuter des instructions pour la réalisation des étapes du procédé (ou du processus) de contrôle et/ou pour l'exécution des instructions du ou des logiciels embarqués dans le dispositif de contrôle 10. Le processeur 40 peut inclure de la mémoire intégrée, une interface d'entrée/sortie, et différents circuits connus de l'homme du métier. Le dispositif de contrôle 10 comprend en outre au moins une mémoire 41 (par exemple la mémoire 16 illustrée en figure 2) correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur 40 est par exemple stocké sur la mémoire 41. La mémoire 41 peut constituer un support d'informations selon un mode de réalisation particulier en ce qu'elle comprend un programme d'ordinateur (par exemple PG1 en figures 1-2) comportant des instructions pour la réalisation des étapes du procédé (ou du processus) de contrôle de l'invention.

Selon différents exemples de réalisation particuliers et non limitatifs, le dispositif de contrôle 10 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif de contrôle 10 comprend un bloc 42 d'éléments d'interface pour communiquer avec des dispositifs externes, par exemple avec le véhicule 6 ou un serveur distant (ou « cloud »). Les éléments d'interface du bloc 42 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Selon un autre exemple de réalisation particulier et non limitatif, le dispositif de contrôle 10 comprend une interface de communication 43 qui permet d'établir une communication avec d'autres dispositifs via un canal de communication 45. L'interface de communication 43 correspond par exemple à un transmetteur configuré pour transmettre et recevoir des informations et/ou des données via le canal de communication 45. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458), Ethernet (standardisé par la norme ISO/IEC 802-3) ou LIN (de l'anglais « Local Interconnect Network », ou en français « Réseau interconnecté local »).

Dans le cas où le dispositif de contrôle 10 est distant vis-à-vis du véhicule 6, il peut être couplé au véhicule 6 (ou plus précisément au dispositif embarqué 20) via l'un au moins parmi le bloc 42 d'éléments d'interface ou le l'interface de communication 43. De même, l'un au moins des ces moyens peut être utilisés par le dispositif 10 dans un cas où il est embarqué dans le véhicule 6, notamment pour coopérer avec les capteurs 22 du véhicule 6.

Selon un exemple de réalisation particulier et non limitatif, le dispositif de contrôle 10 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif de contrôle 10.

La figure 5 illustre un diagramme des différentes étapes d'un procédé de contrôle d'un véhicule, par exemple du véhicule 6 comme précédemment décrit. Le procédé est par exemple mis en œuvre par le dispositif de contrôle 10 précédemment décrit, ce dispositif pouvant être distant vis-à-vis du véhicule 6 ou embarqué dans ce dernier.

Dans une première étape 51, le dispositif 10 détermine une vitesse limite maximale admissible Vlim du véhicule se rapprochant à une distance d de la courbure de voie, Vlim étant un minimum entre d'une part une première valeur limite VL1 fonction d'un rayon de courbure R de la courbure de voie et d'une accélération latérale maximale admissible a1 et d'autre part une limitation routière VL2 applicable à une portion de la voie de circulation dans laquelle est positionné le véhicule.

Dans une deuxième étape 52, le dispositif 10 détermine une distance de décélération Ddec, nécessaire pour adapter la vitesse V du véhicule 6 à la vitesse limite maximale admissible Vlim, en fonction de la vitesse limite maximale admissible Vlim, de la vitesse V du véhicule et d'une accélération longitudinale minimale admissible a2.

Dans une troisième étape 53, si d ≤ Ddec, le dispositif 10 contrôle le véhicule 6 à partir d'au moins une commande de conduite CMD1 en limitant la vitesse du véhicule 6 à la vitesse maximum admissible Vlim.

Selon des variantes de réalisation, les variantes et exemples des opérations décrits ci-avant en relation avec les figures 1-4 s'appliquent aux étapes du procédé de contrôle de la figure 5.

Comme le comprend l'homme du métier, tous les modes de réalisation et variantes décrits ci-avant dont certains ont été simplifiés à dessein pour faciliter les explications, ne constituent que des exemples non limitatifs de mise en œuvre de la présente divulgation. En particulier, l'homme du métier pourra envisager une quelconque adaptation ou combinaison des modes de réalisation et variantes décrits ci-avant, afin de répondre à un besoin particulier.

La présente invention ne se limite donc pas aux exemples de réalisation décrits ci-avant mais s'étend notamment à un procédé de contrôle qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule à moteur terrestre, comprenant le dispositif de contrôle 10 tel que précédemment décrit (cf. variantes ci-avant où le dispositif 10 est embarqué dans le véhicule 6).

## Revendications

1. Procédé, mis en œuvre par un dispositif de contrôle (10), de contrôle d'un véhicule (6) circulant à une vitesse V sur une voie de circulation (2) en direction d'une courbure de voie (4), ledit procédé comprenant :
- détermination (51) d'une vitesse limite maximale admissible Vlim du véhicule se rapprochant à une distance d de la courbure de voie (4), Vlim étant un minimum entre d'une part une première valeur limite VL1 fonction d'un rayon de courbure R de la courbure de voie et d'une accélération latérale maximale admissible a1 et d'autre part une limitation routière VL2 applicable à une portion (2a) de la voie de circulation dans laquelle est positionné le véhicule ;
- détermination (52) d'une distance de décélération Ddec, nécessaire pour adapter la vitesse V du véhicule (6) à la vitesse limite maximale admissible Vlim, en fonction de la vitesse limite maximale admissible Vlim, de la vitesse V du véhicule et d'une accélération longitudinale minimale admissible a2 ; et
- si d ≤ Ddec, contrôle (53) du véhicule à partir d'au moins une commande de conduite (CMD1) en limitant la vitesse du véhicule à la vitesse maximum admissible Vlim,
dans lequel le procédé comprend en outre :
- détermination d'une distance minimale dr entre le véhicule (6) et au moins un obstacle (8) sur la voie de circulation (2), dans lequel : $d {r}_{i} = {d}_{i} - V ∗ {r}_{t} - {d}_{sec}$
où i = 1,...,n et n est un nombre d'obstacles tel que n ≥ 1,
où dᵢ est une distance minimale entre respectivement le véhicule et ledit au moins un obstacle, et
où rt est un retard de transmission selon lequel est transmise ladite au moins une commande de conduite au véhicule ;
le procédé comprenant en outre, pour chaque obstacle (8) :
- détermination d'une distance de décélération Ddecᵢ nécessaire pour adapter la vitesse V du véhicule à la vitesse Vᵢ dudit obstacle selon un direction de déplacement (DR1) dudit véhicule ; et
- si drᵢ ≤ Ddecᵢ, le véhicule (6) est contrôlé pour que sa vitesse V soit limitée à un minimum entre la vitesse limite maximale admissible Vlim et la valeur Vᵢ, où Vᵢ est une vitesse dudit obstacle selon ladite direction de déplacement..

2. Procédé selon la revendication 1, dans lequel le contrôle du véhicule (6), réalisé à distance par le dispositif de contrôle (10), comprend :
- génération de ladite au moins une commande de conduite (CMD1) requérant au véhicule de circuler selon une vitesse qui est adaptée pour être inférieure ou égale à Vlim si d ≤ Ddec ; et
- envoi de ladite au moins une commande de conduite au véhicule pour contrôler la vitesse dudit véhicule.

3. Procédé selon la revendication 1, dans lequel le dispositif de contrôle (10) est embarqué dans le véhicule (6), le contrôle du véhicule comprenant :
- réception de ladite au moins une commande de conduite (CMD1) depuis au moins un moyen de commande embarqué du véhicule ; et
- adaptation d'une vitesse requise par ladite au moins une commande de conduite de sorte à être inférieure ou égale à Vlim si d ≤ Ddec.

4. Procédé selon l'une quelconque des revendications précédentes, le procédé comprenant une détermination de la limitation routière VL2 applicable à la portion (2a) de la voie de circulation à partir d'au moins l'un parmi :
- des données vidéo (DT1), représentatives d'une signalisation routière, générées par au moins une caméra (22) embarquée dans le véhicule ; et
- des données cartographiques (DT2) de la voie de circulation.

5. Procédé selon l'une quelconque des revendications précédentes, dans lequel la vitesse limite maximale admissible Vlim est calculée telle que : ${V}_{lim} = min \left(\sqrt{R ∗ a 1},VL2\right)$ où $VL 1 = \sqrt{R ∗ a 1} .$

6. Procédé selon l'une quelconque des revendications précédentes, dans lequel la distance de décélération Ddec est calculée telle que : $Ddec = \frac{Vli {m}^{2} - {V}^{2}}{2 ∗ a 2} .$

7. Programme d'ordinateur (PG1) comportant des instructions pour la mise en œuvre du procédé selon l'une quelconque des revendications précédentes, lorsque ces instructions sont exécutées par un processeur (14 ; 40).

8. Dispositif (10) de contrôle, comprenant une mémoire (16 ; 41) associée à au moins un processeur (14 ; 40) configuré pour la mise en œuvre des étapes du procédé selon l'une quelconque des revendications 1 à 6.

## Patentansprüche

1. Verfahren, das durch eine Kontrollvorrichtung (10) durchgeführt wird, zum Überwachen eines Fahrzeugs (6), das mit einer Geschwindigkeit V auf einer Fahrspur (2) in Richtung einer Gleiskrümmung (4) fährt, wobei das Verfahren umfasst:
- Bestimmen (51) einer maximal zulässigen Grenzgeschwindigkeit Vlim des Fahrzeugs, das sich einer Entfernung d von der Gleiskrümmung (4) annähert, wobei Vlim ein Minimum zwischen einem ersten Grenzwert VL1 in Abhängigkeit von einem Krümmungsradius R der Gleiskrümmung und einer maximal zulässigen seitlichen Beschleunigung a1 einerseits und einer Straßenbegrenzung andererseits ist VL2, anwendbar auf einen Teil (2a) der Fahrspur, in dem das Fahrzeug positioniert ist;
- Bestimmung (52) einer Verzögerungsstrecke Ddec, die erforderlich ist, um die Fahrzeuggeschwindigkeit V des Fahrzeugs (6) an die maximal zulässige Geschwindigkeit Vlim anzupassen, in Abhängigkeit von der maximal zulässigen Geschwindigkeit Vlim, der Fahrzeuggeschwindigkeit V und einer minimal zulässigen Längsbeschleunigung a2; und
- wenn d ≤ Ddec, Steuerung (53) des Fahrzeugs von mindestens einer Fahrsteuerung (CMD1) durch Begrenzung der Fahrzeuggeschwindigkeit auf die maximal zulässige Geschwindigkeit Vlim,
Verfahren, bei dem das Verfahren ferner umfasst:
- Bestimmen eines Mindestabstands DR zwischen dem Fahrzeug (6) und mindestens einem Hindernis (8) auf der Fahrspur (2), ${dr}_{i} = {d}_{i} - V ∗ {r}_{t} - {d}_{sec}$
wobei: i = 1,...,n und n eine Anzahl von Hindernissen ist, wie n ≥ 1,
wobei di ein Mindestabstand zwischen dem Fahrzeug und dem mindestens einen Hindernis ist, und wobei RT eine Übertragungsverzögerung ist, gemäß der der mindestens eine Fahrbefehl an das Fahrzeug übertragen wird;
das Verfahren umfasst ferner für jedes Hindernis (8) :
- Bestimmen eines Verzögerungsabstands Ddeci, das erforderlich ist, um die Fahrzeuggeschwindigkeit V an die Geschwindigkeit Vi des Hindernisses in einer Fahrtrichtung (DR1) des Fahrzeugs anzupassen; und
- wenn dri ≤ Ddeci, wird das Fahrzeug (6) so gesteuert, dass seine Geschwindigkeit V auf ein Minimum zwischen der zulässigen Höchstgeschwindigkeit Vlim und dem Wert Vi begrenzt wird, wobei Vi eine Geschwindigkeit des Hindernisses in der Fahrtrichtung ist.

2. Verfahren nach Anspruch 1, wobei die Steuerung des Fahrzeugs (6), die von der Steuervorrichtung (10) aus der Ferne durchgeführt wird, umfasst:
- Erzeugen des mindestens einen Fahrsteuerelements (CMD1), das das Fahrzeug auffordert, mit einer Geschwindigkeit zu fahren, die angepasst ist, kleiner oder gleich Vlim zu sein, wenn d ≤ Ddec; und
- Senden des mindestens einen Fahrsteuerelements an das Fahrzeug, um die Geschwindigkeit des Fahrzeugs zu steuern.

3. Verfahren nach Anspruch 1, bei dem die Steuervorrichtung (10) in das Fahrzeug (6) eingebaut ist, wobei die Fahrzeugsteuerung umfasst:
- Empfangen des mindestens einen Fahrbefehls (CMD1) von mindestens einer fahrzeugseitigen Steuereinrichtung; und
- Anpassen einer Geschwindigkeit, die von dem mindestens einen Fahrbefehl benötigt wird, um kleiner oder gleich Vlim zu sein, wenn d ≤ Ddec.

4. Verfahren nach einem der vorhergehenden Ansprüche, wobei das Verfahren das Bestimmen der Straßenbegrenzung VL2, die auf den Teil (2a) der Fahrspur anwendbar ist, aus mindestens einem der Folgenden umfasst:
- Videodaten (DT1), die für eine Straßensignalisierung repräsentativ sind und von mindestens einer im Fahrzeug eingebauten Kamera (22) erzeugt werden; und
- Kartendaten (DT2) der Fahrspur.

5. Verfahren nach einem der vorhergehenden Ansprüche, bei dem die maximal zulässige Grenzgeschwindigkeit Vlim so berechnet wird, dass: ${V}_{lim} = min \left(\sqrt{R ∗ a 1},VL2\right)$ wobei $VL 1 = \sqrt{R ∗ a 1} .$

6. Verfahren nach einem der vorhergehenden Ansprüche, bei dem der Verzögerungsabstand Ddec wie folgt berechnet wird: $Ddec = \frac{{Vlim}^{2} - {V}^{2}}{2 ∗ a 2} .$

7. Computerprogramm (PG1) mit Anweisungen zur Durchführung des Verfahrens nach einem der vorhergehenden Ansprüche, wenn diese Anweisungen von einem Prozessor (14; 40) ausgeführt werden.

8. Steuervorrichtung (10) mit einem Speicher (16; 41), der mit mindestens einem Prozessor (14; 40) verbunden ist, der zur Durchführung der Schritte des Verfahrens nach einem der Ansprüche 1 bis 6 konfiguriert ist.

## Claims

1. Method, implemented by a control device (10), for controlling a vehicle (6) travelling at a speed V on a taxiway (2) in management with a curvature of the taxiway (4), said method comprising:
- determination (51) of a maximum permissible speed limit Vlim of the vehicle approaching a distance d from the curvature of the taxiway (4), Vlim being a minimum between, on the one hand, a first limit value VL 1 depending on a radius of curvature R of the taxiway curvature and a maximum permissible lateral acceleration a 1 and, on the other hand, a road limitation VL 2 applicable to a portion (2 a) of the taxiway in which the vehicle is positioned;
- determination (52) of a deceleration distance Ddec, necessary to adapt the speed limit limit of the vehicle (6) to the maximum permissible speed, maximum permissible speed Vlim, vehicle speed V and a minimum permissible longitudinal acceleration a2; and
- if d ≤ Ddec, control (53) of the vehicle from at least one driving order (CMD1) by limiting the vehicle speed to the maximum permissible speed Vlim,
in which the method further comprises:
- determining a minimum distance dr between the vehicle (6) and at least one obstacle (8) on the taxiway (2), in which: ${dr}_{i} = {d}_{i} - V ∗ {r}_{t} - {d}_{sec}$
where i=1,...,n and n is an obstacle quantity such that n≧1,
where di is a minimum distance between the vehicle and said at least one obstacle, respectively,
and where rt is a transmission delay according to which said at least one driving order is transmitted to the vehicle;
the method further comprising, for each obstacle (8):
- determining a deceleration distance Ddeci necessary to adapt the speed V of the vehicle to the speed Vi of said obstacle according to a management of movement (DR 1) of said vehicle; and
- if dri ≦ Ddeci, the vehicle (6) is on dock so that its minimum speed is V between the maximum permissible speed limit Vlim and the value Vi, where Vi is a speed of said obstacle according to said displacement management.

2. Method according to claim 1, wherein the control of the vehicle (6), realised remotely by the control device (10), comprises:
- generating said at least one driving order (CMD 1) requiring the vehicle to travel at a speed which is adapted to be less than or equal to Vlim if d≦Ddec; and
- sending said at least one driving order to the vehicle to control the speed of said vehicle.

3. Method according to claim 1, wherein the control device (10) is onboard the vehicle (6), the control of the vehicle comprising:
- receipt of said at least one driving order (CMD 1) from at least one onboard order means of the vehicle; and
- adapting a speed required by said at least one driving order so as to be less than or equal to Vlim if d≦Ddec.

4. Method according to any one of the previous claims, the method comprising a determination of the road limitation VL 2 applicable to the portion (2 a) of the taxiway on the basis of at least one {circumflex over (X)}:
- video data (DT 1), representative of a road sign, generated by at least one camera (22) on board the vehicle; and
- cartographic data (DT 2) of the taxiway.

5. Method according to claim 1, wherein the maximum permissible speed Vlim is calculated such that: ${V}_{lim} = min \left(\sqrt{R ∗ a 1},VL2\right)$ where $VL 1 = \sqrt{R ∗ a 1} .$

6. Method according to claim 1, wherein the deceleration distance Ddec is calculated such that: $Ddec = \frac{{Vlim}^{2} - {V}^{2}}{2 ∗ a 2} .$

7. Computer plan (PG1) comprising instructions for implementing the method according to any one of the previous claims, when these instructions are executed by a processor (14; 40).

8. Control device (10), comprising a memory (16; 41) associated with at least one processor (14; 40) configured for implementing the steps of the method according to any one of claims 1 to 6.
